# EUROPÄISCHE PATENTSCHRIFT

(11) **EP 0 724 320 B1**
(45) Veröffentlichungstag und Bekanntmachung des Hinweises auf die Patenterteilung: **10.04.2002**
(21) Anmeldenummer: 96250018.7
(22) Anmeldetag: 24.01.1996
(51) Int. Cl.: H02J 3/24, H02H 3/40

(54) **Verfahren zum Gewinnen eines die Schwingungsmittelpunktlage von Pendelungen kennzeichnenden Signals**
Method for providing a signal characterizing the central position of pendulum type oscillations
Méthode d'obtention d'un signal caractérisant la position centrale des oscillations pendulaires

(30) Priorität: 26.01.1995 DE 19503627
(43) Veröffentlichungstag der Anmeldung: 31.07.1996
(73) Patentinhaber: SIEMENS AKTIENGESELLSCHAFT, 80333 München (DE)
(72) Erfinder: Fritschi, Jürgen, D-13353 Berlin (DE); Herrmann, Hans-Joachim, Dr., D-91459 Markt Erlbach (DE)

(56) Entgegenhaltungen:
- UNGRAD, H.; WINKLER W.; WISZNIEWSKI A.: "Schutztechnik in Elektroenergiesystemen" 1994 , SPRINGER , BERLIN XP002035193 21116 * Seite 233 - Seite 235 *
- ELEKTRIE, Bd. 45, Nr. 9, 1.Januar 1991, Seiten 340-346, XP000263435 PIETZSCH H. ET AL.: "ASYNCHRONLAUF VON GENERATOREN IM ELEKTROENERGIESYSTEM UND DIE MOEGLICHKEITEN SEINER SCHUTZTECHNISCHEN ERFASSUNG"

## Beschreibung

Die Erfindung bezieht sich auf ein Verfahren zum Gewinnen eines die Schwingungsmittelpunktlage von Pendelungen in einem elektrischen Energieversorgungsnetz kennzeichnenden Signals, bei dem eine aus Strom- und Spannungswerten des Energieversorgungsnetzes gebildete Ortskurve von Impedanzwerten mit eine Auslösecharakteristik definierenden Impedanzwerten im Hinblick auf eine Erfassung aufeinanderfolgender Eintritts- und Austrittsschnittpunkte mit der Auslösecharakteristik untersucht wird, wobei aus erfaßten Schnittpunkten mit einem einen Nahbereich beschreibenden Teil der Auslösecharakteristik auf einen Schwingungsmittelpunkt im Bereich einer Generator-Transformator-Einheit und aus erfaßten Schnittpunkten mit einem einen Fernbereich beschreibenden weiteren Teil der Auslösecharakteristik auf einen Schwingungsmittelpunkt im anschließenden Netz geschlossen wird.

Ein Verfahren dieser Art ist in dem Buch von H. Ungrad, W. Winkler und A. Wiszniewski "Schutztechnik in Elektroenergiesystemen", 1991, Seiten 233 bis 235 beschrieben. Bei diesem bekannten Verfahren weist die Auslösecharakteristik eine linsenförmige Gestalt auf; die linsenförmige Auslösecharakteristik ist durch eine Reaktanz-Kennlinie in einen einen Nahbereich beschreibenden Teil und einen einen Fernbereich beschreibenden weiteren Teil unterteilt. Außerdem ist die linsenförmige Charakteristik von einer den Nah- und den Fernbereich durchziehenden, die Charakteristik halbierenden Geraden unterteilt. Wird bei der Durchführung des bekannten Verfahrens bei einer Pendelung eine Ortskurve von Impedanzwerten gebildet, die im Nahbereich auf einer Seite in die linsenförmige Auslösecharakteristik eintritt und auf der anderen Seite aus diesem Bereich der Auslösecharakteristik austritt, dann liegt der Schwingungsmittelpunkt der Pendelung im Bereich der Generator-Transformator-Einheit, und es wird ein entsprechendes Signal erzeugt, auf das hin die Generator-Transformator-Einheit vom Netz abgeschaltet werden kann. Tritt bei einer anderen Pendelung die Ortskurve der ermittelten Impedanzwerte im Fernbereich in die Auslösecharakteristik ein und verläßt die Auslösecharakteristik auch in diesem Bereich, dann liegt der Schwingungsmittelpunkt der Pendelung in einem sich an die Generator-Transformator-Einheit anschließenden Netz, und es wird ein diese Lage des Schwingungsmittelpunktes kennzeichnendes Signal gebildet. Auf ein erstes Signal dieser Art wird im allgemeinen noch keine Abschaltung des Netzes vorgenommen, sondern es werden eine vorgegebene Anzahl von Signalen dieser Art abgewartet, bis das Netz abgeschaltet wird.

Der Erfindung liegt die Aufgabe zugrunde, ein Verfahren zum Gewinnen eines die Schwingungsmittelpunktlage von Pendelungen kennzeichnenden Signals anzugeben, das bei allen möglichen Verläufen der Ortskurve von Impedanzwerten ein eindeutiges, die jeweilige Schwingungsmittelpunktlage von Pendelungen kennzeichnendes Signal abgibt.

Zur Lösung dieser Aufgabe wird bei einem Verfahren der eingangs angegebenen Art erfindungsgemäß ein einen Schwingungsmittelpunkt im Generator-Transformator-Bereich kennzeichnendes Signal durch Erfassen des Schnittpunktes der gebildeten Ortskurve mit einer Nah- und Fernbereich der Auslösecharakteristik durchziehenden Halbierenden der Auslösecharakteristik im Nahbereich der Auslösecharateristik gewonnen, und es wird ein anderes einen Schwingungsmittelpunkt im Netz kennzeichnendes Signal durch Erfassen des Schnittpunktes der gebildeten Ortskurve mit der Halbierenden im Fernbereich der Auslösecharakteristik erzeugt.

Ein wesentlicher Vorteil des erfindungsgemäßen Verfahrens besteht darin, daß mit ihm die Schwingungsmittelpunktlage von Pendelungen auch dann eindeutig feststellbar ist, wenn die Ortskurve der ermittelten Impedanzwerte beispielsweise im Nahbereich der Auslösecharakteristik eintritt und im Fernbereich der Auslösecharakteristik austritt. Auch in den Fällen, in denen die Ortskurve der ermittelten Impedanzwerte in einem Bereich der Auslösecharakteristik eintritt, im anderen Bereich die Halbierende der Auslösecharakteristik schneidet und im ersten Bereich wieder austritt, ergeben sich bei Anwendung des erfindungsgemäßen Verfahrens eindeutige Meßergebnisse hinsichtlich der Lage des Schwingungsmittelpunktes von Pendelungen.

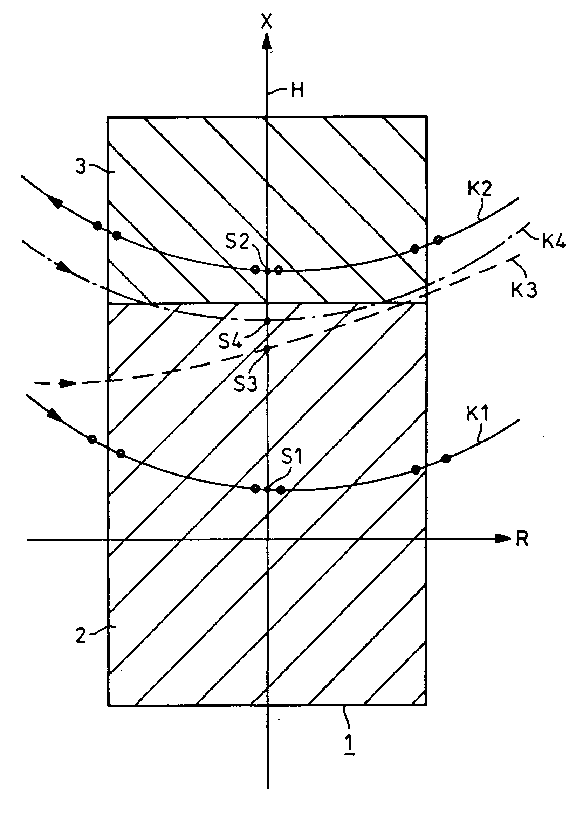

Zur Erläuterung der Erfindung ist in der Figur eine Auslösecharakteristik mit unterschiedlichen vorkommenden Formen der Ortskurve von ermittelten Impedanzen dargestellt.

Bei der dargestellten Auslösecharakteristik 1 handelt es sich um eine polygonale Auslösecharakteristik, die in üblicher Weise in einer R-X-Ebene dargestellt ist. R bezeichnet dabei die Abzisse und gibt den Realteil der Impedanz an, während X auf der Ordinate aufgetragen ist und den Imaginäranteil der Impedanz bezeichnet.

Wie die Figur ferner erkennen läßt, ist die Auslösecharakteristik in einen durch eine Schraffur von links unten nach rechts oben gekennzeichneten Nahbereich 2 und einen in der Figur oberen, durch eine Schraffur von links oben nach rechts unten gekennzeichneten Fernbereich 3 unterteilt. Durch den Nahbereich 2 sind Impedanzwerte festgelegt, die den Bereich einer Generator-Transformator-Einheit umfassen, während der Fernbereich 3 den Teil des Netzes von den Impedanzen her erfaßt, der sich an die Generator-Transformator-Einheit anschließt.

Ergibt sich im Falle einer in dem zu überwachenden Netz auftretenden Pendelung eine Ortskurve der jeweils aus Strom und Spannung des Netzes ermittelten Impedanzwerte entsprechend einer Kurve K1, dann wird aus einem Eintritt der Ortskurve im Nahbereich 2 und Austritt dieser Ortskurve ebenfalls im Nahbereich 2 geschlossen, daß es sich bei der Pendelung um eine Pendelung mit ihrem Schwingungsmittelpunkt im Nahbereich handelt. Daraufhin wird ein erstes, diese Schwingungsmittelpunktlage kennzeichnendes Signal erzeugt und daraufhin oder nach Abwarten des Auftretens eines Signals derselben Art die Generator-Transformator-Einheit abgeschaltet. Ergibt sich bei einer anderen Pendelung eine Ortskurve K2 der erfaßten Impedanzwerte, das heißt eine Ortskurve, die im Fernbereich 3 der Auslösecharakteristik eintritt und auch im Fernbereich 3 wieder austritt, dann ist dies ein Anzeichen dafür, daß der Schwingungsmittelpunkt dieser Pendelungen im Bereich des sich anschließenden Netzes liegt. Eine derartige Pendelung ist als erheblich weniger kritisch anzusehen, so daß auf ein daraufhin erzeugtes kennzeichnendes Signal in der Regel noch keine Netzabschaltung erfolgt; meist wird erst nach einer einstellbaren Anzahl von erfaßten kennzeichnenden Signalen dieser Art das Netz abgeschaltet.

Besondere Probleme bereiten Pendelungen, wie sie beispielsweise durch die Ortskurve K3 gekennzeichnet sind. Bei Pendelungen dieser Art tritt die Ortskurve K3 im Nahbereich 2 der Auslösecharakteristik 1 ein und verläßt die Auslösecharakteristik im Fernbereich 3. Dies bedeutet, daß aus den Eintritts- und Austrittsschnittpunkten der Ortskurve mit der Auslösecharakteristik keine eindeutige Aussage über die Lage des Schwingungsmittelpunktes der Pendelungen gegeben ist. Erfindungsgemäß wird deshalb der Schnittpunkt S3 der Ortskurve K3 mit einer die Auslösecharakteristik 1 Halbierenden H erfaßt. Liegt dieser Schnittpunkt S3 - wie im Falle der Ortskurve K3 - im Nahbereich 2 der Auslösecharakteristik 1, dann ist dies ein Zeichen dafür, daß der Schwingungsmittelpunkt dieser Pendelung im Bereich der Generator-Transformator-Einheit liegt. Es wird in diesem Falle ein diese Schwingungsmittelpunktlage kennzeichnendes Signal erzeugt und daraufhin oder nach Abwarten eines oder mehrerer Signale derselben Art die Generator-Transformator-Einheit abgeschaltet.

Auch im Falle einer Pendelung, die sich durch eine Ortskurve K4 darstellen läßt, ist ohne weiteres aus der Erfassung der Eintritts- und Austritts-Schnittpunkte der Ortskurve K4 mit der Auslösecharakteristik 1 eine eindeutige Aussage über die Schwingungsmittelpunktlage von Pendelungen nicht möglich. Auch hier verhilft die Erfassung des Schnittpunktes S4 der Ortskurve K4 mit der Halbierenden H zu einer eindeutigen Bestimmung der Schwingungsmittelpunktlage, indem beim Feststellen des Schnittpunktes S4 das kennzeichnende Signal erzeugt wird.

Da häufig ohne die Erfassung der Schnittpunkte der ermittelten Impedanzwerte mit der Halbierenden H eine eindeutige Aussage über die Lage des Schwingungsmittelpunktes von Pendelungen nicht möglich ist, wird im Rahmen des erfindungsgemäßen Verfahrens generell bei jeder Ortskurve der Schnittpunkt mit der Halbierenden ermittelt, also auch ein Schnittpunkt S1 im Falle der Ortskurve K1 unter Erzeugen des einen einen Schwingungsmittelpunkt im Nahbereich kennzeichnenden Signals und ein Schnittpunkt S2 im Falle der Ortskurve K2 unter Gewinnen eines anderen einen Schwingungsmittelpunkt im Fernbereich kennzeichnenden Signals festgestellt und ausgewertet.

Die Anwendung des erfindungsgemäßen Verfahrens ist selbstverständlich nicht auf die Verwendung einer Auslösecharakteristik in Form eines Polygons beschränkt, sondern ist auch unter Verwendung anders gestalteter Auslösecharakteristiken, also auch beispielsweise bei linsenförmigen Auslösecharakteristiken, möglich.

Ferner ist die Anwendung des erfindungsgemäßen Verfahrens nicht darauf beschränkt, daß die die Auslösecharakteristik 1 Halbierende H mit der Ordinate zusammenfällt; es ist vielfach zur Anpassung an spezielle Netzverhältnisse häufig vorteilhaft, wenn der Neigungswinkel der Auslösecharakteristik 1 entsprechend den Anlageverhältnissen gewählt wird. Die Halbierende hat dann einen entsprechenden Verlauf.

## Patentansprüche

1. Verfahren zum Gewinnen eines die Schwingungsmittelpunktlage von Pendelungen in einem elektrischen Energieversorgungsnetz kennzeichnenden Signals, bei dem
- eine aus Strom- und Spannungswerten des Energieversorgungsnetzes gebildete Ortskurve von Impedanzwerten mit eine Auslösecharakteristik definierenden Impedanzwerten im Hinblick auf eine Erfassung aufeinanderfolgender Eintritts- und Austrittsschnittpunkte mit der Auslösecharakteristik untersucht wird,
- wobei aus erfaßten Schnittpunkten mit einem einen Nahbereich beschreibenden Teil der Auslösecharakteristik auf einen Schwingungsmittelpunkt im Bereich einer Generator-Transformator-Einheit und aus erfaßten Schnittpunkten mit einem einen Fernbereich beschreibenden weiteren Teil der Auslösecharakteristik auf einen Schwingungsmittelpunkt im anschließenden Netz geschlossen wird,
**dadurch gekennzeichnet, daß**
- ein einen Schwingungsmittelpunkt im Generator-Transformator-Bereich kennzeichnendes Signal durch Erfassen des Schnittpunktes (z.B. S3) der gebildeten Ortskurve (z.B. K3) mit einer Nah(2)- und Fernbereich (3) der Auslösecharakteristik (1) durchziehenden Halbierenden (H) der Auslösecharakteristik (1) im Nahbereich (2) der Auslösecharakteristik (1) gewonnen wird und
- ein anderes einen Schwingungsmittelpunkt im Netz kennzeichnendes Signal durch Erfassen des Schnittpunktes (S2) der gebildeten Ortskurve (K2) mit der Halbierenden (H) im Fernbereich (3) der Auslösecharakteristik (1) erzeugt wird.

## Claims

1. Method for obtaining a signal characterising the position of the centre of oscillation of hunting movements in an electrical power supply network, in which
- a locus of impedance values formed from current and voltage values of the power supply network is examined with impedance values defining a trigger characteristic with regard to detecting consecutive entry and exit intersections with the trigger characteristic,
- wherein conclusions can be drawn from detected intersections with a part of the trigger characteristic describing a near range as to a centre of oscillation in the range of a generator-transformer unit and conclusions can be drawn from detected intersections with another part of the trigger characteristic describing a far range as to a centre of oscillation in the adjoining network,
**characterised in that**
- a signal characterising a centre of oscillation in the generator-transformer range is obtained by detecting the intersection (e.g. S3) of the locus which is formed (e.g. K3) with a bisector (H) of the trigger characteristic (1) passing through the near range (2) and far range (3) of the trigger characteristic (1) in the near range (2) of the trigger characteristic (1) and
- another signal characterising a centre of oscillation in the network is generated by detecting the intersection (S2) of the locus (K2) which is formed with the bisector (H) in the far range (3) of the trigger characteristic (1).

## Revendications

1. Procédé d'obtention d'un signal caractérisant la position centrale d'oscillation pendulaire d'un réseau d'alimentation en énergie électrique, dans lequel
- on recherche le lieu géométrique, formé à partir de valeurs de courant et de tension du réseau d'alimentation en énergie, de valeurs d'impédance, ayant des valeurs d'impédance définissant une caractéristique de déclenchement en vue de détecter des points d'intersection d'entrée et de sortie ayant la caractéristique de déclenchement,
- on déduit à partir des points détectés d'intersection avec une partie de la caractéristique de déclenchement décrivant une zone proche, un point central d'oscillation dans la région d'une unité générateur-transformateur et à partir de points détectés d'intersection avec une autre partie de la caractéristique de déclenchement décrivant une zone éloignée, un point central d'oscillation du réseau raccordé,
**caractérisé en ce que**
- on obtient un signal caractérisant un point central d'oscillation dans la zone générateur-transformateur en détectant le point (par exemple S3) d'intersection du lieu géométrique formé (par exemple K3) et d'une bissectrice (H) de la caractéristique (1) de déclenchement dans la zone (2) proche de la caractéristique (1) de déclenchement, qui passe dans la zone (2) proche et dans la zone (3) lointaine de la caractéristique (1) de déclenchement, et
- on produit un autre signal caractérisant un point central d'oscillation du réseau en détectant le point (S2) d'intersection du lieu géométrique (K2) formé et de la bissectrice (H) dans la zone (3) lointaine de la caractéristique (1) de déclenchement.
